# EUROPEAN PATENT SPECIFICATION

(11) **EP 3 116 080 B1**
(45) Date of publication and mention of the grant of the patent: **01.09.2021**
(21) Application number: 15175820.8
(22) Date of filing: 08.07.2015
(51) Int. Cl.: H02H 7/12, H02M 1/00, H02H 9/00

(54) **A HIGH EFFICIENCY LIMITER CIRCUIT**
HOCHEFFIZIENTE BEGRENZERSCHALTUNG
CIRCUIT LIMITEUR À HAUTE EFFICACITÉ

(43) Date of publication of application: 11.01.2017
(73) Proprietor: Vestel Elektronik Sanayi ve Ticaret A.S., 45030 Manisa (TR)
(72) Inventor: Kirisken, Barbaros, 45030 Manisa (TR); Yatir, Mustafa, 45030 Manisa (TR)
(74) Representative: Kehl, Ascherl, Liebhoff & Ettmayr Patentanwälte Partnerschaft mbB

(56) References cited:
- EP-A1- 2 586 898
- CN-A- 104 578 093
- US-A1- 2002 191 359
- None

## Description

### FIELD OF THE INVENTION

The invention relates to a limiter circuit adapted for use in a power supply and to the use of the limiter circuit in at least one of the following applications: television, set-top-box, laptop, notebook and personal computer.

### BACKGROUND OF THE INVENTION

US 2002/191359 A1 describes an inrush current protection circuit for a power supply.

CN 104 578 093 A describes an inrush control circuit based on a kind of phased switch peak value operation for power compensation.

GB 1,132,476 A describes a thyristor-controlled power supply system. The control of power supplies by thyristors, more particularly power supplies to transformer rectifiers, is shown.

US 2,264,746 A describes a reed switch. The reed switch is an electrical switch operated by an applied magnetic field. It consists of a pair of contacts on ferrous metal reeds in a hermetically sealed glass envelope. The contacts may be normally open, closing when a magnetic field is present, or normally closed and opening when a magnetic field is applied. The switch may be actuated by a coil, making a reed relay, or by bringing a magnet near to the switch. Once the magnet is pulled away from the switch, the reed switch will go back to its original position.

A reed relay is invented by Bell Laboratories and consists of two ferromagnetic blades that are hermetically sealed in a glass capsule. The blades overlap internally in the glass capsule with a gap between them, and make contact with each other in the presence of a suitable magnetic field, when the magnetic field is applied by a permanent magnet or by an electromagnet. Reed switches are used in various low and high power applications or sensor applications. Usually, a reed switch with an open contact and a high current rating is used.

Conventionally, there are two primary circuits used. Firstly, for applications over 150 W, resistances with a high current rating are used in series with an input of mains. In an initial state, the circuit limits the current and slows charging speed of the bulk ca-pacitor. After a few milliseconds these resistances are short-circuited by a relay which is controlled by a delay circuit. However, such systems are highly costly and the circuit uses seven to eight extra components and thus a large amount of free space on a PCB layout. Further, the system goes into action at every voltage drop since it cannot check the remaining capacitor energy. Secondly, for applications below 150 W, one or more negative temperature coefficient thermistors (NTC's) are used. An NTC has a high initial resistance at room temperature. This high resistance is limiting inrush currents. When the inrush current starts to pass over the NTC's, they start to heat and their resistance drops to a very low value. At low power levels an NTC keeps a temperature of 130 °C to 140 °C and loses 1 W to 2 W continuously in steady state. Although this second primary circuit shows a cost advantage com-pared to the first primary circuit, the main disadvantages are power loss, continuous heat and the circuit is unable to use power supplies with a high rating due to power loss.

### SUMMARY OF THE INVENTION

It is the object of the invention to provide a limiter circuit which is highly efficient, merely needs a minimum number of elements and also is highly cost-effective.

This object is achieved by the subject matter of the independent claims. Preferred embodiments are defined in the sub claims.

In the following context, the terms "connectable" and "connected" mean "electrically connectable" and "electrically connected", respectively. Further, the term "connectable" means that an element is "connected" to another element when the circuit or some element changes to an active state. The inrush current is preferably provided from the input of mains. It is an idea of the invention to provide a limiter circuit with-out any relay and delay circuits that is applicable in any power supply.

According to a preferred embodiment of the invention, the limiter circuit comprises a second plurality of inrush limiting elements adapted for limiting the inrush current, wherein each inrush limiting element is connected in series to an adjacent one of the inrush limiting elements, wherein the second plurality of inrush limiting elements is connected in parallel to the first plurality of inrush limiting elements and in parallel to the reed switch. Hence, it is possible to provide two or more parallel branches of inrush limiting elements that are connected in parallel to the reed switch and thus to split and to control the inrush current more easily.

According to a preferred embodiment of the invention, the reed switch is coupled at the second end to the wound element such that a magnetic leakage area from the wound element is generated when the inrush current is provided. Hence, after an inrush current is flowing towards the wound element a magnetic field is generated.

According to a preferred embodiment of the invention, the wound element comprises at least one of a power fraction correction (PFC) coil, a transformer and a secondary coil. Preferably, a bulk circuit is provided and comprises a wound element. The bulk circuit is preferably connected to the limiter circuit by a bridge rectifier. The bulk circuit preferably comprises at least one capacitor.

According to a preferred embodiment of the invention, each of the first and the second plurality of inrush limiting elements comprises at least one of a fixed resistor and a negative temperature coefficient thermistor (NTC). Hence, a plurality of fixed resistors might be connected in series to each other in a branch parallel to the reed switch, a plurality of NTC's can be connected in series in a branch parallel to the reed switch or a combination of fixed resistors and NTC's can be connected in series in one branch or in two branches that are both parallel to each other and parallel to the reed switch.

According to a preferred embodiment of the invention, when the limiter circuit is in an initial state and the inrush current is provided, the limiter circuit limits the inrush current and is configured to generate a magnetic field area around the wound element and the reed switch stays in the first position such that a supply current flows over a branch with the first and/or the second plurality of inrush limiting elements. Since the reed switch stays in the first position with open contacts the supply current will only flow over the inrush limiting elements and thus the inrush current is limited. Preferably, after the inrush current is provided and the magnetic leakage area is generated, the reed switch changes to a second position with a closed contact and the limiter circuit reaches steady state such that a supply current flows via the reed switch. Preferably, when the limiter circuit is in steady state, at least one capacitor comprises a charge larger than a predetermined value and is connected to the limiter circuit and the first and the second plurality of inrush limiting elements are short-circuited. Preferably, when the at least one capacitor is removed from mains, the limiter circuit is configured to keep stored energy and discharges the energy stored over the wound element. In this way, the limiter circuit reacts to short interruptions in power supply. The reed switch preferably stays in the second position during discharge of the energy stored such that when the at least one capacitor is reconnected to mains via the limiter circuit, the first and the second plurality of inrush limiting elements are short-circuited.

In this way, the limiter circuit checks the remaining capacitor energy so that it does not go into action at each voltage drop. Further, there is no continuous heat, no power loss and thus a power supply shows high rating.

According to a second aspect of the invention, above-mentioned object is achieved by the use of a limiter circuit according to the first aspect of the invention in at least one of the following applications: television (TV), set-top-box (STB), laptop, notebook and personal computer (PC).

### BRIEF DESCRIPTION OF THE DRAWINGS

These and other aspects of the invention will be apparent from and elucidated with reference to the embodiments described hereinafter which should be considered as examples of the invention without limiting the scope of the invention.

In the drawings:
- Fig. 1: exemplary shows a limiter circuit applied on a switch mode power supply according to a first preferred embodiment of the invention;
- Fig. 2: shows a PCB layout of a limiter circuit according to a second preferred embodiment of the invention;
- Fig. 3: shows initial and steady state positions of a limiter circuit according to a third preferred embodiment of the invention; and
- Fig. 4: shows bulk capacitor charge and current curves of a limiter circuit according to the third preferred embodiment of the invention.

### DETAILED DESCRIPTION OF EMBODIMENTS

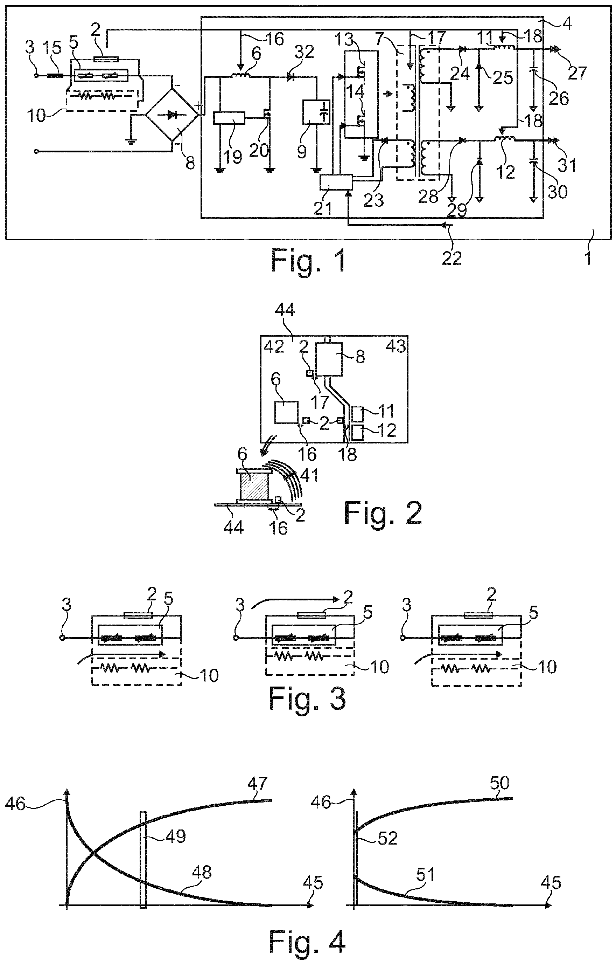

Fig. 1 shows a switch mode power supply circuit (SMPS circuit) 1 comprising a limiter circuit according to a first preferred embodiment of the invention. This AC to DC power supply needs an inrush limiting element at the AC input side of the power supply to limit an inrush current drawn by an empty bulk capacitor 9. A reed switch 2 is provided and two inrush limiting elements 5 are connected in series to each other and in parallel to the reed switch 2, wherein the limiter circuit is electrically connectable in series to the remaining of the circuit. The reed switch 2 is mounted and located near a wound element 6, 7, 11, 12. In this first preferred embodiment of the invention, there are three possibilities 16, 17, 18 for the reed switch 2 to be connected with a bulk circuit 4 at its second end, whereas it is connected to an input of mains 3 at its first end. As a first possibility 16, the reed switch 2 is connectable to a PFC coil 6 with a magnetic leakage. As a second possibility 17, the reed switch 2 is connectable to a transformer 7 on the PCB and, as a third possibility 18, the reed switch 2 is connectable to secondary coils 11, 12 on the PCB.

When the SMPS circuit is energized at its initial state, a high inrush current is trying to pass through the circuit but the inrush limiting elements 5 are NTC's in this first preferred embodiment and start to limit this high current surge until the circuit goes to steady state where capacitors have enough charge. According to other preferred embodiments of the invention, fixed resistors can be used as inrush limiting elements as a second plurality of inrush limiting elements 10. In this other preferred embodiments, it is also possible that the first and the second plurality of inrush limiting elements 5, 10 are connected in parallel to each other. When the SMPS circuit goes into steady state, in a few milliseconds a leakage magnetic field is generated around the wound element 6, 7, 11, 12 and thus the wound element 6, 7, 11, 12 acts as a weak electromagnet. The reed switch 2 closes its contacts after this magnetic field is generated and the inrush limiting elements 5 are short-circuited in steady state. As a result, the two inrush limiting elements 5 are removed from the current path in steady state.

Further, the SMPS circuit keeps the energy on the bulk capacitor 9 when it is removed from line of mains 3. The energy kept on the bulk capacitor 9 is slowly discharging over the wound magnetic element 6, 7, 11, 12, where the reed switch 2 is arranged in close proximity. This discharge energy keeps the reed switch 2 in a second position with closed contacts and if the SMPS circuit is energized from mains again, the two inrush limiting elements 5 do not go into operation because the bulk capacitor 9 has enough energy stored and there is no need of inrush limiting elements. Hence, in this first preferred embodiment, the limiter circuit improves immunity of the power supply against short interruptions. Further, without using any relay and delay circuit inrush limiting elements are used which are heating and power consuming elements in steady state.

In this first preferred embodiment, the bulk circuit 4 is connected via a bridge rectifier 8 to the limiter circuit. A fuse 15 is connected in a path between mains 3 and the limiter circuit. The SMPS circuit comprises some further PFC elements, such as a PFC IC 19, a PFC switch 20 and a PFC diode 32. A switch mode controller IC 21 that is connected to a half bridge rectifier 23 controls a high side switch 13 and a low side switch 14. At the side of the first DC output 27 a first and a second rectifier diode 24, 25 and a first filter capacitor 26 are included, whereas at the side of the second DC output 31 a first and a second rectifier diode 28, 29 and a second filter capacitor 30 are included.

In Fig. 1 a two stage SMPS circuit is shown, where a half-bridge switch circuit 8, 23 is used. Further, a voltage feedback 22 is used for regulation. As already mentioned, the reed switch 2 can be either located near a PFC coil 6 in a first arrangement 16, near a SMPS transformer 7 in a second arrangement 17 or near secondary filter coils 11, 12 of DC outputs in a third arrangement 18. According to other preferred embodiments of the invention, the limiter circuit is not applied on an SMPS circuit but to another kind of power supply which needs inrush limiting.

Fig. 2 schematically shows a PCB layout of a limiter circuit according to a second preferred embodiment of the invention. A primary side 42 and a secondary side 43 of an SMPS circuit arranged on PCB 44 are illustrated. A reed switch 2, a bridge rectifier 8, a PFC coil 6 and two secondary coils 11, 12 are also indicated in Fig. 2. In the lower part of Fig. 2 a magnetic leakage area 41 is shown that is generated by the PFC coil 6 in this second preferred embodiment. Fig. 2 shows alternative positioning of the reed switch 2 and the wound elements 6, 7, 11, 12. Thus, different delays are generated and since only one element, namely the reed switch 2, is used, the system is highly cost-effective.

Fig. 3 shows initial and steady state positions of a limiter circuit according to a third preferred embodiment of the invention. In this third preferred embodiment a reed switch 2 with a normally open contact and high current rating is used which applies up to 3 A. This reed switch 2 closes its contact when enough magnetic field is applied, 50 to 60 ampere-turns in this third preferred embodiment.

Fig. 3 is explained in connection with Fig. 4 showing bulk capacitor charges and current curves of a limiter circuit according to the third preferred embodiment of the invention. There are two possible initial states. In a first initial state, the bulk capacitor is completely empty. In a second initial state, the bulk capacitor is partly charged.

With regard to the first initial state, namely that the bulk capacitor is completely empty, Fig. 4A shows the respective bulk capacitor charge 47 and the corresponding capacitor current curve 48 in a diagram where the amplitude axis 46 is plotted over the time axis 45. The reed relay triggering area 49, where the system goes to steady state is also shown in Fig. 4A. In this state, without using inrush limiting elements a very high current is provided from mains that can easily damage a fuse 15 (cp. Fig. 1), a bridge rectifier 8 (cp. Figs. 1 and 2) or the other primary components. Hence, inrush limiting elements 5, 10 have to be used. In the left part of Fig. 3 an initial limited current is shown. While the limited current is supplied to the remaining of the circuit a bulk capacitor 9 is charged to a value, where the system maintains its steady state condition. In this condition the wound element 6, 7, 11, 12 that is arranged near the reed switch 2 is energized and a leakage magnetic area 41 is generated. This leakage magnetic area 41 changes the reed switch state to the closed state and the current starts to pass over the reed switch 2, as shown in the middle part of Fig. 3, and the inrush limiting elements 5, 10 are bypassed. Since this limiter circuit waits until the magnetic field is generated, a delay of a few milliseconds is automatically generated without using any delay circuit. In the steady state the supply current flows over the reed switch 2.

In the second possible initial state, as illustrated in Fig. 4B, the bulk capacitor is partly charged. Fig. 4B shows the respective bulk capacitor charge 50 and the corresponding capacitor current curve 51 in a diagram where the amplitude axis 46 is plotted over the time axis 45. The reed relay is already triggered 52 in Fig. 4B. In short voltage interruptions or power losses less than 10 seconds in this third preferred embodiment, the power loss is detected by the controller IC 21 (see Fig. 1). The bulk capacitor is kept charged by the switches 13, 14 (cp. embodiment of Fig. 1). At this stage, the bulk capacitor is still charged and the system allows a slow discharge of the capacitor over the wound element 6, 7, 11, 12. The use of inrush limiting elements is not required since the wound element 6, 7, 11, 12 has still enough magnetic field to keep the reed switch 2 closed. And in the initial state, where the energy starts to supply from mains 3, the current starts to pass directly over the reed switch 2 and the system starts at the steady state position which is illustrated in the right part of Fig. 3.

As explained above, the invention relates to a limiter circuit adapted for use in a power supply 1 and to the use of the limiter circuit in at least one of the following applications: television, set-top-box, laptop, notebook and personal computer. The limiter circuit comprises: a reed switch 2 connectable to an input of mains 3 at a first end and connectable in series with a wound element 6, 7, 11, 12 at a second end, wherein the reed switch 2 is configured to be in a first position with a normally open contact when no inrush current is provided, and a first plurality of inrush limiting elements 5 adapted for limiting the inrush current, wherein each inrush limiting element is connected in series to an adjacent one of the inrush limiting elements 5, wherein the first plurality of inrush limiting elements 5 is connected in parallel to the reed switch 2. In this way, a limiter circuit is provided which is highly efficient, merely needs a minimum number of elements and also is highly cost-effective.

The invention relates to a limiter circuit adapted for use in a power supply 1 and to the use of the limiter circuit in at least one of the following applications: television, set-top-box, laptop, notebook and personal computer. The limiter circuit comprises: a reed switch 2 connectable to an input of mains 3 at a first end and connectable in series with a wound element 6, 7, 11, 12 at a second end, wherein the reed switch 2 is configured to be in a first position with a normally open contact when no inrush current is provided, and a first plurality of inrush limiting elements 5 adapted for limiting the inrush current, wherein each inrush limiting element is connected in series to an adjacent one of the inrush limiting elements 5, wherein the first plurality of inrush limiting elements 5 is connected in parallel to the reed switch 2. In this way, a limiter circuit is provided which is highly efficient, merely needs a minimum number of elements and also is highly cost-effective.

## Claims

1. A limiter circuit adapted for use in a power supply (1), comprising:
a reed switch (2) connected to an input of mains (3) at a first end, wherein the reed switch (2) is configured to be in a first position with a normally open contact, and
a first plurality of inrush limiting elements (5) adapted for limiting the inrush current, wherein each inrush limiting element is connected in series to an adjacent one of the inrush limiting elements (5),
wherein the first plurality of inrush limiting elements (5) are connected in parallel to the reed switch (2),
**characterized in that**
the reed switch (2) and the inrush limiting elements (5) are connected in series with a wound element (6, 7, 11, 12) at a second end of the reed switch (2) and wherein the wound element (6, 7, 11, 12) is magnetically coupled to the reed switch (2) to control operation of the reed switch (2); and
wherein at least one capacitor (9) is arranged between the wound element (6, 7, 11, 12) and electrical ground,
wherein the limiter circuit comprises an initial state and a steady state, wherein in the initial state the reed switch (2) is in a first, open position and an inrush current flows via the inrush limiting elements (5) and the wound element (6, 7, 11, 12), and
wherein in the steady state, the wound element (6, 7, 11, 12) generates a magnetic field resulting in the reed switch (2) changing into a second, closed position to bypass the inrush limiting elements (5), and
when the limiter circuit is in the second, steady state, the at least one capacitor (9) comprises a charge larger than a predetermined value, and
wherein in case of power loss from mains (3) the energy stored in the at least one capacitor (9) is discharged over the wound element (6, 7, 11, 12).

2. The limiter circuit according to claim 1, comprising a second plurality of inrush limiting elements (10) adapted for limiting the inrush current, wherein each inrush limiting element is connected in series to an adjacent one of the inrush limiting elements (10), wherein the second plurality of inrush limiting elements (10) is connected in parallel to the first plurality of inrush limiting elements (5) and in parallel to the reed switch (2).

3. The limiter circuit according to one of the preceding claims, wherein the wound element (6, 7, 11, 12) comprises at least one of a power fraction correction coil, a transformer and a secondary coil.

4. The limiter circuit according to one of claims 1 to 3, wherein each of the first and the second plurality of inrush limiting elements (5, 10) comprises at least one of a fixed resistor and a negative temperature coefficient thermistor.

5. The limiter circuit according to one of claims 2, 3, when claim 3 depends on claim 2, or 4, when claim 4 depends on claim 2, wherein when the limiter circuit is in the initial state and the inrush current is provided, the limiter circuit limits the inrush current and is configured to generate the magnetic leakage area (41) around the wound element (6, 7, 11, 12) and the reed switch (2) stays in the first position such that a supply current flows over a branch with the first and/or the second plurality of inrush limiting elements (5, 10).

6. The limiter circuit according to claim 5, wherein after the inrush current is provided and the magnetic leakage area (41) is generated, the reed switch (2) changes to a second position with a closed contact and the limiter circuit reaches the steady state such that a supply current flows via the reed switch (2).

7. The limiter circuit according to one of claims 2 to 6, when dependent on claim 2, wherein when the limiter circuit is in the steady state, the second plurality of inrush limiting elements (10) is short-circuited.

8. The limiter circuit according to one of claims 6 and 7, when dependent on claim 6, wherein the reed switch (2) stays in the second position during discharge of the energy stored such that when the at least one capacitor (9) is reconnected to mains (3) via the limiter circuit, the first and the second plurality of inrush limiting elements (5, 10) are short-circuited.

9. Use of a limiter circuit according to one of claims 1 to 8 in at least one of the following applications: television, set-top-box, laptop, notebook and personal computer.

## Patentansprüche

1. Eine Begrenzerschaltung, die zur Verwendung in einer Stromversorgung (1) angepasst ist, aufweisend:
einen Reed-Schalter (2), der mit einem Eingang des Netzes (3) an einem ersten Ende verbunden ist, wobei der Reed-Schalter (2) so konfiguriert ist, dass er sich in einer ersten Position mit einem normalerweise offenen Kontakt befindet, und
eine erste Mehrzahl von Einschaltbegrenzungselementen (5), die zur Begrenzung des Einschaltstroms angepasst sind, wobei jedes Einschaltbegrenzungselement in Reihe mit einem benachbarten der Einschaltbegrenzungselemente (5) verbunden ist,
wobei die erste Mehrzahl von Einschaltbegrenzungselementen (5) parallel zu dem Reed-Schalter (2) geschaltet ist,
**dadurch gekennzeichnet, dass**
der Reed-Schalter (2) und die Einschaltbegrenzungselemente (5) mit einem gewickelten Element (6, 7, 11, 12) an einem zweiten Ende des Reed-Schalters (2) in Reihe geschaltet sind und wobei das gewickelte Element (6, 7, 11, 12) magnetisch mit dem Reed-Schalter (2) gekoppelt ist, um den Betrieb des Reed-Schalters (2) zu steuern; und
wobei mindestens ein Kondensator (9) zwischen dem gewickelten Element (6, 7, 11, 12) und der elektrischen Masse angeordnet ist,
wobei die Begrenzerschaltung einen Anfangszustand und einen eingeschwungenen Zustand aufweist, wobei in dem Anfangszustand der Reed-Schalter (2) in einer ersten, offenen Position ist und ein Einschaltstrom über die Einschaltbegrenzungselemente (5) und das gewickelte Element (6, 7, 11, 12) fließt, und
wobei das gewickelte Element (6, 7, 11, 12) im eingeschwungenen Zustand ein Magnetfeld erzeugt, das dazu führt, dass der Reed-Schalter (2) in eine zweite, geschlossene Stellung wechselt, um die Einschaltbegrenzungselemente (5) zu überbrücken, und
wenn sich die Begrenzerschaltung im zweiten, stationären Zustand befindet, der mindestens eine Kondensator (9) eine Ladung aufweist, die größer als ein vorbestimmter Wert ist, und
wobei im Falle eines Leistungsverlustes vom Netz (3) die in dem mindestens einen Kondensator (9) gespeicherte Energie über das gewickelte Element (6, 7, 11, 12) entladen wird.

2. Die Begrenzerschaltung gemäß Anspruch 1, die eine zweite Mehrzahl von Einschaltbegrenzungselementen (10) aufweist, die zur Begrenzung des Einschaltstroms geeignet sind, wobei jedes Einschaltbegrenzungselement mit einem benachbarten der Einschaltbegrenzungselemente (10) in Reihe geschaltet ist, wobei die zweite Mehrzahl von Einschaltbegrenzungselementen (10) parallel zu der ersten Mehrzahl von Einschaltbegrenzungselementen (5) und parallel zu dem Reed-Schalter (2) geschaltet ist.

3. Die Begrenzerschaltung gemäß einem der vorhergehenden Ansprüche, wobei das gewickelte Element (6, 7, 11, 12) mindestens eines von einer Leistungsanteil-Korrekturspule, einem Transformator und einer Sekundärspule aufweist.

4. Die Begrenzerschaltung gemäß einem der Ansprüche 1 bis 3, wobei jedes der ersten und zweiten Mehrzahl von Einschaltbegrenzungselementen (5, 10) mindestens einen Festwiderstand und einen Thermistor mit negativem Temperaturkoeffizienten aufweist.

5. Die Begrenzerschaltung gemäß einem der Ansprüche 2, 3, wenn Anspruch 3 von Anspruch 2 abhängt, oder 4, wenn Anspruch 4 von Anspruch 2 abhängt, wobei die Begrenzerschaltung, wenn sie sich im Ausgangszustand befindet und der Einschaltstrom bereitgestellt wird, den Einschaltstrom begrenzt und so konfiguriert ist, dass sie die magnetische Streufläche (41) um das gewickelte Element (6, 7, 11, 12) herum erzeugt und der Reed-Schalter (2) in der ersten Position verbleibt, so dass ein Versorgungsstrom über einen Zweig mit dem ersten und/oder der zweiten Mehrzahl von Einschaltbegrenzungselementen (5, 10) fließt.

6. Die Begrenzerschaltung gemäß Anspruch 5, wobei der Reed-Schalter (2) nach dem Anlegen des Einschaltstroms und dem Erzeugen der magnetischen Streufläche (41) in eine zweite Stellung mit geschlossenem Kontakt wechselt und die Begrenzerschaltung den eingeschwungenen Zustand erreicht, so dass ein Versorgungsstrom über den Reed-Schalter (2) fließt.

7. Die Begrenzerschaltung gemäß einem der Ansprüche 2 bis 6, in Abhängigkeit von Anspruch 2, wobei, wenn sich die Begrenzerschaltung im eingeschwungenen Zustand befindet, die zweite Mehrzahl von Einschaltbegrenzungselementen (10) kurzgeschlossen ist.

8. Die Begrenzerschaltung nach einem der Ansprüche 6 und 7, in Abhängigkeit von Anspruch 6, wobei der Reed-Schalter (2) während der Entladung der gespeicherten Energie in der zweiten Stellung verbleibt, so dass beim Wiedereinschalten des mindestens einen Kondensators (9) über die Begrenzerschaltung an das Netz (3) die erste und die zweite Vielzahl von Einschaltbegrenzungselementen (5, 10) kurzgeschlossen werden.

9. Verwendung einer Begrenzerschaltung gemäß einem der Ansprüche 1 bis 8 in mindestens einer der folgenden Anwendungen: Fernseher, Set-Top-Box, Laptop, Notebook und Personalcomputer.

## Revendications

1. Circuit limiteur adapté pour être utilisé dans une alimentation électrique (1), comprenant :
un interrupteur à lame souple (2) connecté à une entrée du secteur (3) à une première extrémité, dans lequel l'interrupteur à lame souple (2) est configuré pour être dans une première position avec un contact normalement ouvert, et
une première pluralité d'éléments de limitation d'irruption (5) adaptés pour limiter le courant d'irruption, dans laquelle chaque élément de limitation d'irruption est connecté en série à un élément adjacent des éléments de limitation d'irruption (5),
dans lequel la première pluralité d'éléments de limitation du courant d'appel (5) est connectée en parallèle à l'interrupteur à lames (2),
**caractérisé en ce que**
le commutateur à lame souple (2) et les éléments de limitation d'appel (5) sont connectés en série avec un élément enroulé (6, 7, 11, 12) à une seconde extrémité du commutateur à lame souple (2) et dans lequel l'élément enroulé (6, 7, 11, 12) est couplé magnétiquement au commutateur à lame souple (2) pour commander le fonctionnement du commutateur à lame souple (2) ; et
dans lequel au moins un condensateur (9) est disposé entre l'élément bobiné (6, 7, 11, 12) et la masse électrique,
dans lequel le circuit limiteur comprend un état initial et un état permanent, dans lequel, dans l'état initial, l'interrupteur à lames (2) est dans une première position ouverte et un courant d'appel circule via les éléments de limitation d'appel (5) et l'élément enroulé (6, 7, 11, 12), et
dans lequel, en régime permanent, l'élément enroulé (6, 7, 11, 12) génère un champ magnétique, ce qui a pour effet de faire passer l'interrupteur à lames (2) dans une deuxième position fermée pour contourner les éléments de limitation d'appel (5), et lorsque le circuit limiteur est dans le second état stable, le au moins un condensateur (9) comprend une charge supérieure à une valeur prédéterminée, et
dans lequel, en cas de perte de puissance du secteur (3), l'énergie stockée dans le au moins un condensateur (9) est déchargée sur l'élément enroulé (6, 7, 11, 12).

2. Circuit limiteur selon la revendication 1, comprenant une seconde pluralité d'éléments de limitation d'irruption (10) adaptés pour limiter le courant d'irruption, dans lequel chaque élément de limitation d'irruption est connecté en série à un élément adjacent des éléments de limitation d'irruption (10), dans lequel la seconde pluralité d'éléments de limitation d'irruption (10) est connectée en parallèle à la première pluralité d'éléments de limitation d'irruption (5) et en parallèle au commutateur à lames (2).

3. Circuit limiteur selon l'une des revendications précédentes, dans lequel l'élément bobiné (6, 7, 11, 12) comprend au moins un élément parmi une bobine de correction de fraction de puissance, un transformateur et une bobine secondaire.

4. Circuit limiteur selon l'une des revendications 1 à 3, dans lequel chacun de la première et de la deuxième pluralité d'éléments de limitation de l'appel de courant (5, 10) comprend au moins l'un d'une résistance fixe et d'une thermistance à coefficient de température négatif.

5. Circuit limiteur selon l'une des revendications 2, 3, lorsque la revendication 3 dépend de la revendication 2, ou 4, lorsque la revendication 4 dépend de la revendication 2, dans lequel lorsque le circuit limiteur est dans l'état initial et que le courant d'appel est fourni, le circuit limiteur limite le courant d'appel et est configuré pour générer la zone de fuite magnétique (41) autour de l'élément enroulé (6, 7, 11, 12) et l'interrupteur à lames (2) reste dans la première position de sorte qu'un courant d'alimentation circule sur une branche avec la première et/ou la deuxième pluralité d'éléments de limitation d'appel (5, 10).

6. Circuit limiteur selon la revendication 5, dans lequel après que le courant d'appel est fourni et que la zone de fuite magnétique (41) est générée, le commutateur à lames souples (2) passe à une deuxième position avec un contact fermé et le circuit limiteur atteint l'état stable de sorte qu'un courant d'alimentation circule via le commutateur à lames souples (2).

7. Circuit limiteur selon l'une des revendications 2 à 6, lorsqu'il dépend de la revendication 2, dans lequel, lorsque le circuit limiteur est à l'état stable, la deuxième pluralité d'éléments de limitation d'appel (10) est court-circuitée.

8. Circuit limiteur selon l'une des revendications 6 et 7, lorsqu'il dépend de la revendication 6, dans lequel l'interrupteur à lames (2) reste dans la deuxième position pendant la décharge de l'énergie stockée de sorte que lorsque le au moins un condensateur (9) est reconnecté au secteur (3) via le circuit limiteur, la première et la deuxième pluralité d'éléments de limitation d'appel (5, 10) sont court-circuitées.

9. Utilisation d'un circuit limiteur selon l'une des revendications 1 à 8 dans au moins l'une des applications suivantes : télévision, décodeur, ordinateur portable, bloc-notes et ordinateur personnel.
